Europäisches Patentamt

European Patent Office

Office européen des brevets

(11) Veröffentlichungsnummer : **0 233 881**
**B1**

(12) # EUROPÄISCHE PATENTSCHRIFT

(45) Veröffentlichungstag der Patentschrift :
26.04.89

(21) Anmeldenummer : 85905790.3

(22) Anmeldetag : 12.10.85

(86) Internationale Anmeldenummer :
PCT/EP 85/00539

(87) Internationale Veröffentlichungsnummer :
WO/8602704 (09.05.86 Gazette 86/10)

(51) Int. Cl.⁴ : **F 16 D 25/10**, F 16 D 25/06,
F 16 D 35/00

(54) LAMELLENKUPPLUNG MIT KLAUENKUPPLUNG.

(30) Priorität : 24.10.84 PCT/EP84/00330

(43) Veröffentlichungstag der Anmeldung :
02.09.87 Patentblatt 87/36

(45) Bekanntmachung des Hinweises auf die Patenterteilung : 26.04.89 Patentblatt 89/17

(84) Benannte Vertragsstaaten :
DE FR GB IT

(56) Entgegenhaltungen :
DE--B-- 1 215 450
DE--B-- 1 251 100
DE--B-- 2 431 104
FR--A-- 2 388 173

(73) Patentinhaber : ZAHNRADFABRIK FRIEDRICHSHA-
FEN AKTIENGESELLSCHAFT
Löwentaler Strasse 100 Postfach 2520
D-7990 Friedrichshafen 1 (DE)

(72) Erfinder : LEHLE, Hubert
Eschstrasse 11
D-7996 Meckenbeuren (DE)

(74) Vertreter : Raue, Reimund
Zahnradfabrik Friedrichshafen AG Löwentaler
Strasse 100 Postfach 2520
D-7990 Friedrichshafen 1 (DE)

## Beschreibung

Die Erfindung betrifft eine Kupplung nach dem Oberbegriff von Patentanspruch 1.

Eine bekannte Kupplung dieser Art nach der DE-B-24 31 104 hat im geöffneten Zustand noch ein Schleppmoment, das entweder, bei festgehaltenem Abtrieb, Verlustwärme und Temperaturanstieg oder, bei freiliegendem, freidrehendem Abtrieb, z. B. bei der Zapfwelle eines Ackerschleppers, Verletzungsgefahr bedeutet.

Der Erfindung liegt die Aufgabe zugrunde, diese Nachteile zu beseitigen und eine Kupplung nach dem Oberbegriff des Patentanspruchs 1 mit sehr geringem Restmoment zu schaffen. Diese Aufgabe wird mit den kennzeichnenden Merkmalen des Hauptanspruchs gelöst.

In demselben Antriebsstrang, in Leistungsflußrichtung hintereinander, sind zwei Kupplungen, eine kraftschlüssige Lamellenkupplung und eine formschlüssige Klauenkupplung, zu einer Kupplungseinheit baulich vereinigt. Die Lamellenkupplung gestattet ein Einkuppeln bei größter Drehzahl und bei größtem Drehmoment, bei voller Last ; die Klauenkupplung ermöglicht ein vollständiges Trennen des Antriebsstranges. Ein einziges Betätigungsglied schließt nacheinander, fast gleichzeitig, erst die Klauenkupplung und dann die Lamellenkupplung, und öffnet nacheinander, fast gleichzeitig, erst die Lamellenkupplung und dann die Klauenkupplung. Beim Öffnen der Kupplungseinheit ist nur sehr kurze Zeit das Leerlauf-Schleppmoment der Lamellenkupplung, sofort danach aber nur noch das sehr geringe Leerlauf-Restmoment der Klauenkupplung wirksam. Dieses Restmoment ist so gering, daß z. B. bei der Zapfwelle eines Ackerschleppers keine besondere Bremse nötig ist.

Anspruch 2 fügt den Vorteil hinzu, daß mit dem geringen Mehraufwand eines zweiten Betätigungsgliedes wahlweise ein drittes Anschlußglied mit dem ersten Anschlußglied verbunden werden kann, mit den gleichen Vorteilen des Einschaltens unter voller Last und des vollständigen Trennens wie bei dem Antriebsstrang nach Anspruch 1. Eine einzige Lamellenkupplung wird in gleicher Weise und mit den gleichen Vorteilen für zwei Antriebsstränge verwendet und so doppelt genutzt. Die Bauweise ist in besonderem Maße platzsparend.

Anspruch 3 bringt den Vorteil der Einsparung von Fertigungsaufwand, weil jedes Mitnahmeprofil sowohl für eine Dauerkupplung als auch für eine schaltbare Kupplung genutzt wird.

Anspruch 4 bringt den Vorteil, daß einfache, übliche Mittel benutzt werden. Zur Steuerung des Druckfluids wird in bekannter Weise bei einer einfachen Kupplung nach Anspruch 1 ein Dreiwege-Zweistellungsventil, bei einer Doppelkupplung nach Anspruch 2 ein Vierwege-Dreistellungsventil benutzt. In jedem Fall genügt ein einziger Bedienhebel.

Anspruch 5 bringt den Vorteil der Einsparung von Einzelteilen, weil die Losräder gleichzeitig Zylinder und die Betätigungsglieder gleichzeitig Kolben bilden.

In der Zeichnung ist als Ausführungsbeispiel eine Doppelkupplung nach der Erfindung dargestellt.

Die einzige Figur zeigt einen Ausschnitt aus einem Längsschnitt.

Auf einer Welle 1, axial gehalten durch Sicherungsringe 2 und Anlaufscheiben 3, sind mit Wälzlagern 4 zwei Losräder 5, 6 gelagert. Zwischen den Losrädern 5, 6, axial gehalten durch Sicherungsringe 7 und Anlaufscheiben 8 und drehfest durch Mitnahmeprofile 9, 10, ist ein erster Lamellenträger 11 mit der Welle 1 fest verbunden. Der Lamellenträger 11 trägt, axial begrenzt beweglich zwischen zwei Sicherungsringen 12, Innenlamellen 13, davon zwei Endlamellen 14. Zwischen den Losrädern 5, 6, axial gehalten durch Stirnflächen 15, 16 der Losräder 5, 6, radial gelagert auf den Endlamellen 14, ist ein zweiter Lamellenträger 17 angeordnet. Der Lamellenträger 17 trägt in einem Mitnahmeprofil 18 Außenlamellen 19. Die Außenlamellen 19 und die Innenlamellen 13 mit den Endlamellen 14 bilden ein Lamellenpaket 20. Die Losräder 5, 6 bilden Zylinder 5, 6. Kolben 21, 22 in den Zylindern 5, 6 bilden mit den Zylindern 5, 6 Kammern 23, 24, abgedichtet durch Dichtringe 25, 26, 27, 28. Jeder Kolben 21, 22 ist mit einem Zylinder 5, 6 über Mitnahmeprofile 29, 30, 31, 32 drehfest und axial beweglich verbunden. Die Mitnahmeprofile 29, 30 der Kolben 21, 22 passen zum Mitnahmeprofil 18 des Lamellenträgers 17. Mit diesen Mitnahmeprofilen 18, 29, 30 bildet der Lamellenträger 17 mit jedem Kolben 21, 22 eine formschlüssige, schaltbare Klauenkupplung 17, 21 ; 17, 22. Außerhalb der Kammern 23, 24 sind, mittelbar über Sicherungsringe 33, 34 und Federteller 35, 36, zwischen den Kolben 21, 22 und den Zylindern 5, 6 Rückstellfedern 37, 38 angeordnet.

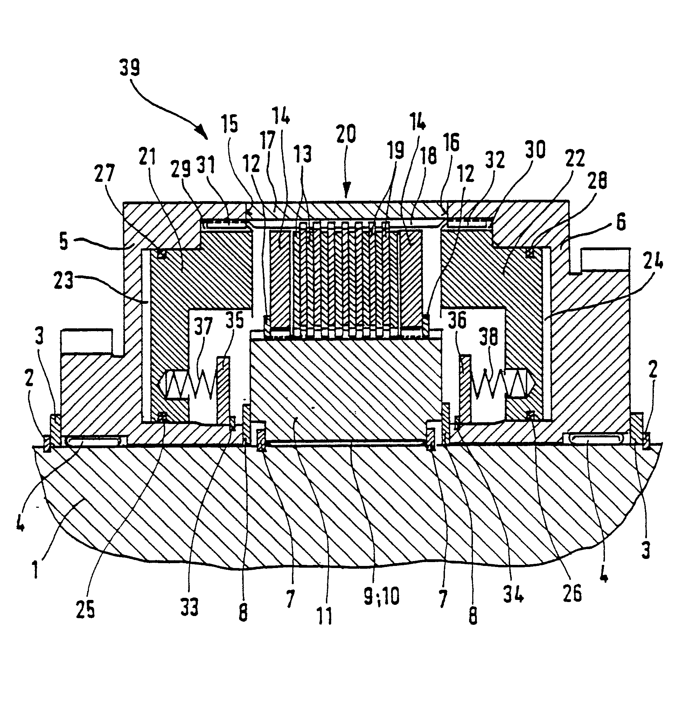

Die Rückstellfedern 37, 38 drücken die Kolben 21, 22 als Betätigungsglieder 21, 22 von dem Lamellenpaket 20 weg in erste Endstellungen (in Fig. 1 dargestellt). Sowohl eine kraftschlüssige Lamellenkupplung 11, 17, 20 als auch die Klauenkupplungen 17, 21 ; 17, 22 sind dann geöffnet, können die Welle 1 als ein erstes Anschlußglied 1, das Losrad 5 als ein zweites Anschlußglied 5 und das Losrad 6 als ein drittes Anschlußglied 6 frei zueinander drehen. Drucköl in einer der beiden Kammern 23 oder 24, zugeführt durch nicht dargestellte Leitungen, drückt den Kolben 21 oder 22 zu dem Lamellenpaket 20 hin und schließt dabei erst die formschlüssige Klauenkupplung 17, 21 oder 17, 22 und dann, fast gleichzeitig, die kraftschlüssige Lamellenkupplung 11, 17, 20. Läßt man das Drucköl wieder entweichen, so drücken die Rückstellfedern 37 oder 38 den Kolben 21 oder 22 wieder von dem Lamellenpaket 20 weg und öffnen dabei erst die Lamellenkupplung 11, 17, 20 und dann, fast gleichzeitig, die Klauenkupplung 17, 21 oder 17,

22.

Während die kraftschlüssige Lamellenkupplung 11, 17, 20, ein Einschalten bei höchster Drehzahl und höchstem Drehmoment, bei voller Last, gestattet, ermöglicht die formschlüssige Klauenkupplung 17, 21 oder 17, 22 ein fast vollständiges Trennen, ist beim Ausschalten nur für sehr kurze Zeit das Leerlauf-Schleppmoment der Lamellenkupplung 11, 17, 20 und sofort danach nur noch das sehr geringe Leerlauf-Restmoment der Klauenkupplung 17, 21 oder 17, 22 wirksam. Eine einzige Lamellenkupplung 11, 17, 20 und zwei Klauenkupplungen 17, 21 und 17, 22 bilden eine kompakte Doppelkupplung 39 zur Verbindung eines ersten Anschlußgliedes 1, der Welle 1, wahlweise mit einem zweiten Anschlußglied 5, dem Losrad 5, oder mit einem dritten Anschlußglied 6, dem Losrad 6. Ein Lamellenträger 17 der Lamellenkupplung 11, 17, 20 ist zusätzlich gleichzeitig ein Bauteil 17 zweier Klauenkupplungen 17, 21 und 17, 22.

Bezugszeichen

1 Welle, erstes Anschlußglied
2 Sicherungsring
3 Anlaufscheibe
4 Wälzlager
5 Losrad, Zylinder, zweites Anschlußglied
6 Losrad, Zylinder, drittes Anschlußglied
7 Sicherungsring
8 Anlaufscheibe
9 Mitnahmeprofil
10 Mitnahmeprofil
11 Lamellenträger
12 Sicherungsring
13 Innenlamelle
14 Endlamelle
15 Stirnfläche
16 Stirnfläche
17 Lamellenträger
18 Mitnahmeprofil
19 Außenlamelle
20 Lamellenpaket
21 Kolben, Betätigungsglied
22 Kolben, Betätigungsglied
23 Kammer
24 Kammer
25 Dichtring
26 Dichtring
27 Dichtring
28 Dichtring
29 Mitnahmeprofil
30 Mitnahmeprofil
31 Mitnahmeprofil
32 Mitnahmeprofil
33 Sicherungsring
34 Sicherungsring
35 Federteller
36 Federteller
37 Rückstellfeder
38 Rückstellfeder
39 Doppelkupplung

**Patentansprüche**

1. Lastschaltbare, kraftschlüssige Kupplung für einen Antriebsstrang mit einem ersten und einem zweiten Anschlußglied, (1.5) mit einem ersten und einem zweiten Lamellenträger (11, 17), welche Anschlußglieder und Lamellenträger axial fest und um eine gemeinsame Achse drehbar gelagert sind, mit Innenlamellen (13) und Außenlamellen (19), die ein von einer Flüssigkeit durchströmtes Lamellenpaket (20) bilden, und mit einem axial beweglichen Betätigungsglied (21) zum Schließen und Öffnen der Kupplung, dadurch gekennzeichnet, daß

- der erste Lamellenträger (11) mit dem ersten Anschlußglied (1) und das Betätigungsglied (21) mit dem zweiten Anschlußglied (5) über jeweils zueinander passende Mitnahmeprofile (9, 10 ; 29, 31) drehfest verbunden sind,

- das Betätigungsglied (21) und der zweite Lamellenträger (17) zueinander passende, schaltbare Mitnahmeprofile (29, 18) aufweisen und damit eine schaltbare, formschlüssige Klauenkupplung (17, 21) bilden,

- das Betätigungsglied (21) über diese Mitnahmeprofile (29, 18) immer erst das zweite Anschlußglied (5) mit dem zweiten Lamellenträger (17) formschlüssig verbindet, bevor es das Lamellenpaket (20) zusammendrückt und damit das zweite Anschlußglied (5) mit dem ersten Anschlußglied (1) kraftschlüssig verbindet,

- das Betätigungsglied (21) immer erst das Lamellenpaket (20) freigibt und damit die kraftschlüssige Verbindung zwischen dem ersten und dem zweiten Anschlußglied (1, 5) löst, bevor es die formschlüssige Verbindung zwischen dem zweiten Anschlußglied (5) und dem zweiten Lamellenträger (17) löst.

2. Kupplung nach Anspruch 1, dadurch gekennzeichnet, daß

- die Kupplung eine Doppelkupplung (39) ist mit einem axial festen dritten Anschlußglied (6) und mit einem axial beweglichen zweiten Betätigungsglied (22),

- das zweite Betätigungsglied (22) mit dem dritten Anschlußglied (6) über zueinander passende Mitnahmeprofile (30, 32) drehfest verbunden ist,

- das zweite Betätigungsglied (22) und der zweite Lamellenträger (17) zueinander passende, schaltbare Mitnahmeprofile (30, 18) aufweisen und damit eine zweite schaltbare, formschlüssige Klauenkupplung (17, 22) in einem zweiten Antriebsstrang bilden,

- das zweite Betätigungsglied (22) über diese Mitnahmeprofile (30, 18) immer erst das dritte Anschlußglied (6) mit dem zweiten Lamellenträger (17) formschlüssig verbindet, bevor es das Lamellenpaket (20) zusammendrückt und damit das dritte Anschlußglied (6) mit dem ersten Anschlußglied (1) kraftschlüssig verbindet,

- das zweite Betätigungsglied (22) immer erst das Lamellenpaket (20) freigibt und damit die kraftschlüssige Verbindung zwischen dem ersten und dem dritten Anschlußglied (1, 6) löst, bevor es die formschlüssige Verbindung zwischen dem dritten Anschlußglied (6) und dem zweiten Lamellenträger (17) löst.

3. Kupplung nach Anspruch 1 oder 2, dadurch gekennzeichnet, daß der zweite Lamellenträger (17) und das Betätigungsglied (21, 22) je nur ein einziges Mitnahmeprofil (18, 29, 30) aufweisen.

4. Kupplung nach Anspruch 1, 2 oder 3, dadurch gekennzeichnet, daß das Betätigungsglied (21, 22) durch die Kraft einer Rückstellfeder (37, 38) in eine erste axiale Endstellung und als Kolben (21, 22) in einem Zylinder (5, 6) durch ein Druckfluid in eine zweite axiale Endstellung bewegt und dort festgehalten wird.

5. Kupplung nach einem der Ansprüche 2 bis 4, dadurch gekennzeichnet, daß

- das erste Anschlußglied (1) eine Welle (1) ist,
- das zweite und das dritte Anschlußglied (5, 6) Losräder (5, 6) eines Zweigang-Zahnrad-Schaltgetriebes sind,
- die Losräder (5, 6) auf der Welle (1) gelagert sind,
- die Losräder (5, 6) Zylinder (5, 6) mit Kammern (23, 24) bilden,
- die Betätigungsglieder (21, 22) Kolben (21, 22) in diesen Zylindern (5, 6) bilden,
- die Rückstellfedern (37, 38), die zwischen den Kolben (21, 22) und den Zylindern (5, 6), außerhalb der Kammern (23, 24) angeordnet sind, die Kolben (21, 22) als Betätigungsglieder (21, 22) vom Lamellenpaket (20) wegdrücken,
- Drucköl in einer Kammer (23 oder 24) den Kolben (21 oder 22) als Betätigungsglied (21 oder 22) gegen die Kraft der Rückstellfeder (37 oder 38) zum Lamellenpaket (20) hindrückt.

**Claims**

1. A power-shiftable, force-locking clutch for a drive line with a first and second transmission member (1, 5), with a first and second disk support (11, 17), said transmission members and disk supports being axially secured and mounted rotatably about a common axis, with internal disks (13) and external disks (19) which constitute a disk stack (20) perfused by a liquid, and with an axially movable actuator member (21) for engaging and disengaging the clutch, characterised in that

- the first disk support (11) ist non-rotatably connected with the first transmission member (1), and the actuator member (21) is non-rotatably connected with the second transmission member (5), each through mutually matching cam profiles (9, 10 ; 29, 31),
- the actuator member (21) and the second disk support (17) have mutually matching, shiftable cam profiles (29, 18), thereby forming a shiftable, form-locking claw clutch (17, 21),
- through these cam profiles (29, 18), the actuator member (21) connects with form-locking effect always firstly the second transmission member (5) with the second disk support (17), before it compresses the disk stack (20) and thereby connects the second transmission member (5) with the first transmission member (1) with force-locking effect,

- the actuator member (21) always first releases the disk stack (20) and thus dissolves the force-locking connection between the first and second transmission member (1, 5), before it dissolves the form-locking connection between the second transmission member (5) and the second disk support (17).

2. A clutch according to Claim 1, characterised in that

- the clutch is a double clutch (39) with an axially fixed third transmission member (6) and with an axially movable second actuator member (22).
- the second actuator member (22) is non-rotatably connected with the third transmission member (6) through mutually matching cam profiles (30, 32),
- the second actuator member (22) and the second disk support (17) have mutually matching, shiftable cam profiles (30, 18) and thereby constitute a second shiftable, formlocking claw clutch (17, 22) in a second drive line,
- through these cam profiles (30, 18), the second actuator member always first connects with form-locking effect the third transmission member (6) with the first disk support (17) before it compresses the disk stack (20) and thereby connects the third transmission member (6) with the first transmission member with force-locking effect,
- the second actuator member (22) always first releases the disk stack (20) and thereby dissolves the forcelocking connection between the first and third transmission member (1, 6), before dissolving the 5 form-locking connection between the third transmission member (6) and the second disk support.

3. A clutch according to Claim 1 or 2, characterised in that the second disk support (17) and the actuator member (21, 22) have only one cam profile (18, 29, 30) each.

4. A clutch according to Claim 1, 2 or 3, characterised in that the actuator member (21, 22) is moved by the force of a return spring (37, 38) into a first axial limit position and as a piston (21, 22) in a cylinder (5, 6) by a pressure fluid into a second axial limit position and is held there.

5. A clutch according to any one of Claims 2 to 4, characterised in that

— the first transmission member (1) is a shaft (1),
— the second and the third transmission members (5, 6) are loose wheels of a two-ratio toothed-wheel gear,
— the loose wheels (5, 6) are mounted on the shaft (1),
— the loose wheels (5, 6) form cylinders (5, 6) with chambers (23, 24),
— the actuator members (21, 22) form pistons (21, 22) in these cylinders,
— the return springs (37, 38) which are arranged between the pistons (21, 22) and the cylinders (5, 6) outside the chambers (23, 24) push the pistons (21, 22) as actuator members (21, 22) away from the disk stack (20),

— pressurized oil in a chamber (23 or 24) urges the piston (21 or 22) as actuator member (21 or 22) against the force of the return springs (37 or 38) towards the disk stack (20).

## Revendications

1. Embrayage à adhérence pour une voie de transmission, commutable en charge et comportant : un premier et un second élément d'accouplement (1, 5), un premier et un second porte-disques (11, 17), ces éléments d'accouplement et ces porte-disques étant fixes axialement et montés de façon à pouvoir tourner autour d'un axe commun, des disques intérieurs (13) et des disques extérieurs (19) qui forment un paquet de disques (20) traversé par l'écoulement d'un liquide, et un élément d'actionnement (21) mobile axialement pour enclencher ou déclencher l'embrayage, caractérisé en ce que

- le premier porte-disques (11) est solidaire en rotation du premier élément d'accouplement (1), et l'élément d'actionnement (21) est solidaire en rotation du second élément d'accouplement (5), au moyen de profils d'entraînement (9, 10 ; 29, 31) adaptés mutuellement,

- l'élément d'actionnement (21), et le second porte-disques (17), comportent des profils d'entraînement (29, 18) adaptés mutuellement et enclenchables, et forment ainsi un embrayage positif à crabots (17, 21) qui est enclenchable,

- l'élément d'actionnement (21) relie toujours d'abord positivement le second élément d'accouplement (5) au second porte-disque (17), au moyen de ces profils d'entraînement (29, 18) avant de comprimer le paquet de disques (20) et de relier ainsi par adhérence le second élément d'accouplement (5) au premier élément d'accouplement (1),

- l'élément d'actionnement (21) libère toujours d'abord le paquet de disques (20) et libère ainsi la liaison par adhérence entre le premier et le second élément d'accouplement (1, 5), avant de libérer la liaison positive entre le second élément d'accouplement (5) et le second porte-disques (17).

2. Embrayage selon la revendication 1, caractérisé en ce que

- l'embrayage est un embrayage double (39) comportant un troisième élément d'accouplement (6) qui est fixe axialement et un second élément d'actionnement (22) qui est mobile axialement,

- le second élément d'actionnement (22) est solidaire en rotation du troisième élément d'accouplement (6), au moyen de profils d'entraînement (30, 32) adaptés mutuellement,

- le second élément d'actionnement (22) et le second porte-disques (17) comportent des profils d'entraînement (30, 18) adaptés mutuellement et enclenchables, et forment ainsi un second embrayage positif à crabots (17, 22) dans une seconde voie de transmission,

- le second élément (22) relie toujours d'abord positivement le troisième élément d'accouplement (6) au second porte-disque (17), au moyen desdits profils d'entraînement (30, 18), avant de comprimer le paquet de disques (20) et de relier ainsi par adhérence le troisième élément d'accouplement (6) au premier élément d'accouplement (1),

- le second élément d'actionnement (22) libère toujours d'abord le paquet de disques (20) et libère ainsi la liaison par adhérence entre le premier et le troisième élément d'accouplement (1, 6), avant de libérer la liaison positive entre le troisième élément d'accouplement (6) et le second porte-disque (17).

3. Embrayage selon la revendication 1 ou 2, caractérisé en ce que le second porte-disques (17) et l'organe d'actionnement (20, 21) ne comportent chacun qu'un profil d'entraînement (18, 29, 30).

4. Embrayage selon la revendication 1, 2 ou 3, caractérisé en ce que l'organe d'actionnement (21, 22) se déplace sous l'effet de la force d'un ressort de rappel (37, 38) jusqu'à une première position axiale terminale, et comme un piston (21, 22) dans un cylindre (5, 6) sous l'effet d'un fluide de pression qui l'amène à une seconde position axiale terminale et qui l'y maintient.

5. Embrayage selon l'une des revendications 2 à 4, caractérisé en ce que

- le premier élément d'accouplement (1) est un arbre (1),

- le second et le troisième élément d'accouplement (5, 6) sont des pignons fous (5, 6) d'une boîte à engrenages à deux vitesses,

- lesdits pignons fous (5, 6) sont montés sur ledit arbre (1),

- lesdits pignons fous (5, 6) constituent des cylindres (5, 6) ayant des chambres (23, 24),

- les éléments d'actionnement (21, 22) constituent des pistons (21, 22) dans ces cylindres (5, 6),

- les ressorts de rappel (37, 38), qui sont disposés à l'extérieur des chambres (23, 24) entre les pistons (21, 22) et les cylindres (5, 6), repoussent à l'écart du paquet de disques (20) les pistons (21, 22) servant d'éléments d'actionnement (21, 22),

- de l'huile sous pression dans une chambre (23 ou 24) pousse contre le paquet de disques (20) le piston (21 ou 22) servant d'élément d'actionnement (21 ou 22) à l'encontre de la force du ressort de rappel (37 ou 38).